# EUROPEAN PATENT APPLICATION

(11) **EP 2 320 667 A1**
(43) Date of publication of application: **11.05.2011**
(21) Application number: 09173467.3
(22) Date of filing: 20.10.2009
(51) Int. Cl.: H04N 13/00

(54) **Combining 3D video auxiliary data**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

A three dimensional [3D] video signal (21) comprises a first primary data stream (22) representing a left image to be displayed for the left eye of a viewer and a second primary data stream representing a right image to be displayed for the right eye of the viewer for rendering 3D video data exhibiting a nominal depth range. For enabling overlaying auxiliary image data on the 3D video data at an auxiliary depth in the nominal depth range a secondary data stream (23) is included in the signal. The secondary data stream is displayed, during overlaying, for one of the eyes instead of the respective primary data stream for rendering the 3D video data exhibiting a modified depth range farther away from the viewer than the auxiliary depth.

## Description

### FIELD OF THE INVENTION

The invention relates to a method of providing a three dimensional [3D] video signal, the method comprising generating the 3D video signal by including a first primary data stream representing a left image to be displayed for the left eye of a viewer and a second primary data stream representing a right image to be displayed for the right eye of the viewer for rendering 3D video data exhibiting a nominal depth range.

The invention further relates to a method for processing a 3D video signal, 3D source device, a 3D processing device, a 3D video signal, a record carrier and a computer program product.

The invention relates to the field of rendering 3D video data in combination with auxiliary data such as subtitles, logos, or further 3D image data, on a 3D display device.

### BACKGROUND OF THE INVENTION

Devices for generating 2D video data are known, for example video servers, broadcasters, or authoring devices. Currently 3D enhanced devices for providing three dimensional (3D) video data are being proposed. Similarly 3D processing devices for rendering 3D video data are being proposed, like players for optical discs (e.g. Blu-ray Disc; BD) or set top boxes which render received digital video signals. The processing device is to be coupled to a display device like a TV set or monitor. Video data may be transferred to a 3D display via a suitable interface, preferably a high-speed digital interface like HDMI. The 3D display may also be integrated with the 3D processing device, e.g. a television (TV) having a receiving section or a storage section.

For 3D content, such as 3D movies or TV broadcasts, additional, auxiliary data may be displayed in combination with the image data, for example subtitles, a logo, a game score, a ticker tape for financial news or other announcements or news.

Document W02008/115222 describes a system for combining text with 3D content. The system inserts text at the same level as the nearest depth value in the 3D content. One example of 3D content is a two-dimensional image and an associated depth map. In this case, the depth value of the inserted text is adjusted to match the nearest depth value of the given depth map. Another example of 3D content is a plurality of two-dimensional images and associated depth maps. In this case, the depth value of the inserted text is continuously adjusted to match the nearest depth value of a given depth map. A further example of 3D content is stereoscopic content having a right eye view and a left eye view. In this case the text in one of the left eye view and right eye view is shifted to match the nearest disparity value in the stereoscopic image. As a result, the system produces text combined with 3D content wherein the text does not obstruct the 3D effects in the 3D content.

### SUMMARY OF THE INVENTION

The document W02008/115222 describes that the auxiliary graphical data is to be displayed in front of the closest part of the image data. A problem occurs when auxiliary data needs to be combined with 3D video data that has a large depth range. Positioning the auxiliary image data at a selected auxiliary depth in the depth range would result in conflicts or artifacts, while positioning the auxiliary image data close to the viewer might be uncomfortable or cause visual fatigue of the viewer.

It is an object of the invention to provide a system for combining the auxiliary data and 3D video content in a more convenient way.

For this purpose, according to a first aspect of the invention, the method as described in the opening paragraph comprises, for enabling overlaying auxiliary image data on the 3D video data at an auxiliary depth in the nominal depth range, including a secondary data stream to be displayed for one of the eyes instead of the respective primary data stream for rendering the 3D video data exhibiting a modified depth range farther away from the viewer than the auxiliary depth.

For this purpose, according to a second aspect of the invention, a method of processing a 3D video signal, comprises retrieving from the 3D video signal a first primary data stream representing a left image to be displayed for the left eye of a viewer and a second primary data stream representing a right image to be displayed for the right eye of the viewer for rendering 3D video exhibiting a nominal depth range, retrieving from the 3D video signal a secondary data stream to be displayed for one of the eyes instead of the respective primary data stream for rendering the 3D video exhibiting a modified depth range farther away from the viewer than an auxiliary depth, providing auxiliary data, and overlaying, at a depth closer to the viewer than the auxiliary depth, the auxiliary image data on the 3D video data based on the secondary data stream.

For this purpose, according to a further aspect of the invention, a 3D source device for providing 3D video signal, comprises processing means for generating the 3D video signal by including a first primary data stream representing a left image to be displayed for the left eye of a viewer and a second primary data stream representing a right image to be displayed for the right eye of the viewer for rendering 3D video data exhibiting a nominal depth range, and, for enabling overlaying auxiliary image data on the 3D video data at an auxiliary depth in the nominal depth range, including a secondary data stream to be displayed for one of the eyes instead of the respective primary data stream for rendering the 3D video data exhibiting a modified depth range farther away from the viewer than the auxiliary depth.

For this purpose, according to a further aspect of the invention, a 3D processing device for receiving a 3D video signal comprises receiving means for receiving the 3D video signal, and processing means for retrieving from the 3D video signal a first primary data stream representing a left image to be displayed for the left eye of a viewer and a second primary data stream representing a right image to be displayed for the right eye of the viewer for rendering 3D video exhibiting a nominal depth range, retrieving from the 3D video signal a secondary data stream to be displayed for one of the eyes instead of the respective primary data stream for rendering the 3D video exhibiting a modified depth range farther away from the viewer than an auxiliary depth, providing auxiliary data, and overlaying, at a depth closer to the viewer than the auxiliary depth, the auxiliary image data on the 3D video data based on the secondary data stream.

For this purpose, according to a further aspect of the invention, a 3D video signal comprises a first primary data stream representing a left image to be displayed for the left eye of a viewer and a second primary data stream representing a right image to be displayed for the right eye of the viewer for rendering 3D video data exhibiting a nominal depth range, and, for enabling overlaying auxiliary image data on the 3D video data at an auxiliary depth in the nominal depth range, a secondary data stream to be displayed for one of the eyes instead of the respective primary data stream for rendering the 3D video data exhibiting a modified depth range farther away from the viewer than the auxiliary depth.

For this purpose, according to further aspects of the invention, a record carrier carries the above 3D video signal, and a computer program, when executed on a processor, performs the respective steps of the above methods.

The measures have the effect that the auxiliary image data is perceived in front of a background video that is shifted backwards. For enabling overlaying of the auxiliary image data at the suitable depth a selected depth range is made free starting at the auxiliary depth and extending closer to the viewer. The 3D video data, which normally uses the selected depth range, is modified to be farther away from the viewer than the auxiliary depth. Thereto the secondary stream is generated, included in, and retrieved from the 3D video signal and displayed instead of the primary stream. The secondary stream contains the same 3D video, but at a reduced or shifted depth range. The secondary stream, which is displayed for one of the eyes instead of the respective primary data stream, may be displayed with the other primary stream for the other eye. Alternatively two secondary streams may be included to replace both primary streams. Advantageously the viewer now perceives the modified depth range for the same 3D video content during overlaying the auxiliary data. In particular, obscuring the auxiliary data by any near video data, and disturbing effects at the boundary of the auxiliary data, is avoided. Such disturbing effects would occur when auxiliary data is positioned farther away than a closer object but still would be displayed.

A further advantage is that the auxiliary data is not required to be available at the source device but may be dynamically provided at the processing device which generates a combined 3D video signal by positioning the auxiliary data at an appropriate depth, i.e. at or before said auxiliary depth, while selecting the secondary stream for display.

In an embodiment the method comprises providing time segments of the 3D video signal for enabling said overlaying of auxiliary image data, and including said secondary data stream only during the time segments. For showing dynamic auxiliary data like menus or generated auxiliary graphical objects like game characters a suitable part of the 3D video data can be selected based on the time segments. Advantageously the system allows the author of the 3D video to set the time segments and thus selectively allow overlaying of any auxiliary data at the rendering device.

In an embodiment the method comprises including in the 3D video signal at least one of
- overlay markers indicative of the presence of the secondary stream;
- control data for controlling overlaying of auxiliary image data and, during the overlaying, rendering the secondary stream;
- a depth indicator indicative of the auxiliary depth.

Advantageously the overlay markers indicate the availability of the secondary stream to the receiving 3D device. Such device can now overlay the auxiliary image data, e.g. overlaying can be delayed until the presence of the stream or suspended when the secondary stream ends.

Advantageously the control data directly controls the overlaying and, while overlaying, displaying the secondary stream. Hence the creator or sender of the 3D video signal is enabled to control the overlaying and said modified depth background video.

Advantageously the depth indicator indicates that the depth range up to a specific depth value will be free for overlaying, because the effect of the secondary stream is that the 3D video is adapted by shifting backwards (away from the viewer). Hence a range of depth is made free for positioning the auxiliary data in the depth direction in front of the shifted three dimensional video. As the depth indicator specifically indicates the auxiliary depth, the author of the 3D video controls the actual overlaying.

In an embodiment the secondary stream is encoded in dependence of at least one of the corresponding primary data stream; the other primary stream.

Advantageously the amount of coded data that must be transferred via the 3D video signal is reduced. The additional secondary stream has a large correspondence with the corresponding primary stream, as only close objects need to be shifted backward. Also information of the other primary stream may be used for dependently coding the secondary stream.

Further preferred embodiments of the method, 3D devices and signal according to the invention are given in the appended claims, disclosure of which is incorporated herein by reference.

### BRIEF DESCRIPTION OF THE DRAWINGS

These and other aspects of the invention will be apparent from and elucidated further with reference to the embodiments described by way of example in the following description and with reference to the accompanying drawings, in which
Figure 1 shows a system for displaying 3D image data,
Figure 2 shows a 3D video signal including a secondary stream of video data,
Figure 3 shows a data structure including 3D overlay markers, and
Figure 4 shows an additional entry to a playitem.

In the Figures, elements which correspond to elements already described have the same reference numerals.

### DETAILED DESCRIPTION OF EMBODIMENTS

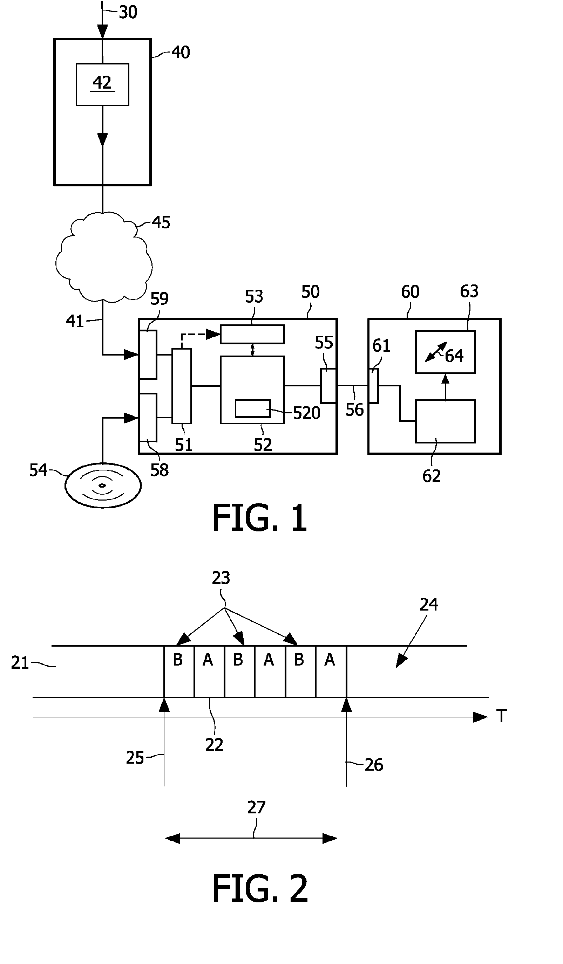

Figure 1 shows a system for displaying three dimensional (3D) image data, such as video, graphics or other visual information. A 3D source device 40 transfers a 3D video signal 41 to a 3D processing device 50, which is coupled to a 3D display device 60 for transferring a 3D display signal 56. The 3D processing device has an input unit 51 for receiving the 3D video signal. For example the device may include an optical disc unit 58 coupled to the input unit for retrieving the 3D video information from an optical record carrier 54 like a DVD or Blu-ray disc. Alternatively, the device may include a network interface unit 59 for coupling to a network 45, for example the internet or a broadcast network, such processing device usually being called a set-top box. The 3D video signal may be retrieved from a remote media server, e.g. the source device 40. The processing device may also be a satellite receiver, or a media player.

The 3D source device has a processing unit 42 for processing in 3D video data 30. The 3D video data may be available from storage, from 3D camera's, etc. The 3D video signal 41 is generated as follows by processor 42. A first primary data stream representing a left image to be displayed for the left eye of a viewer and a second primary data stream representing a right image to be displayed for the right eye of the viewer are included in the 3D video signal. The primary data streams are for normally rendering the 3D video data exhibiting a nominal depth range. In addition overlaying auxiliary image data on the 3D video data is enabled at an auxiliary depth in the nominal depth range as follows. A secondary data stream to be displayed for one of the eyes instead of the respective primary data stream is generated and included also in the 3D video signal for rendering the 3D video data exhibiting a modified depth range farther away from the viewer than the auxiliary depth.

The secondary stream is generated by modifying the depths of objects in the 3D video data, e.g. by modifying disparity, by processing 3D source material from different cameras, or by generating additional stream data based on source material that has a depth map. As such, generating data streams for stereoscopic display having a required depth range is known.

The secondary stream is arranged to be displayed during overlaying for one of the eyes instead of the respective primary data stream while the other primary stream is being displayed for the other eye. For example the original left image is displayed in combination with a right image from the secondary stream. Alternatively two secondary streams may be generated and included in the 3D video signal.

The 3D source device may be a server, a broadcaster, a recording device, or an authoring and/or production system for manufacturing record carriers like the Blu-ray Disc. Blu-ray Disc supports an interactive platform for content creators. It supports two layers of graphics overlay and two sets of programmable environment for the author to choose from. For 3D stereoscopic video there are many formats. More information on the Blu-ray Disc format is available from the website of the Blu-ray Disc association, e.g. in a paper on the audio-visual application format available on http://www.blu-raydisc.com/Assets/Downloadablefile/2b_bdrom_audiovisualapplication_030 5-12955-15269.pdf. Auxiliary data may be included to be added at various stages of the reproduction, e.g. in the player or in the 3D display. The production process of the optical record carriers further comprises the steps of deriving the physical pattern of marks in the tracks which embodies the 3D video signal including the primary and secondary data streams, and subsequently shaping the material of the record carrier to provide the tracks of marks on at least one storage layer.

The 3D processing device has a processing unit 52 coupled to the input unit 51 for processing the 3D information for generating a 3D display signal 56 to be transferred via an output interface unit 55 to the display device, e.g. a display signal according to the HDMI standard, see "High Definition Multimedia Interface; Specification Version 1.3a of Nov 10 2006" available at http://hdmi.org/manufacturer/specification.aspx. The processing unit 52 is arranged for generating the image data included in the 3D display signal 56 for display on the display device 60.

The 3D video signal is received by the receiving units 51,58,59. The 3D video signal comprises the 3D video data including the primary and secondary data streams as defined above. The processor 52 is arranged for retrieving from the 3D video signal a first primary data stream representing a left image and a second primary data stream representing a right image, and the secondary data stream, as described above with the 3D source device. The processor is arranged for generating the usual display signal without auxiliary data, and a display signal of 3D video while overlaying auxiliary data by displaying the secondary data stream for one of the eyes instead of the respective primary data stream for rendering the 3D video exhibiting a modified depth range. The modified depth range is farther away from the viewer than an auxiliary depth.

The processing device has an auxiliary processing unit 53 for providing auxiliary data to be combined with the 3D video data on the 3D display. Auxiliary data may be any additional graphical image data that is to be combined locally, i.e. in the processing device, with 3D video content, such as subtitles, a logo of a broadcaster, a menu or system message, error codes, news flashes, ticker tape, a further 3D stream such as a commentary, etc. The auxiliary data may be included in the 3D video signal, or may be provided via a separate channel, or may be generated locally. In the text below usually subtitle will be used as indicative for every type of auxiliary data.

Finally the processor 52 combines the auxiliary data and the respective first and second data streams for overlaying, at a depth closer to the viewer than the auxiliary depth, the auxiliary image data on the 3D video data. As such, combining a 3D video stream and auxiliary data is known, e.g. from said W02008/115222.

The 3D display device 60 is for displaying 3D image data. The device has an input interface unit 61 for receiving the 3D display signal 56 including the 3D video data and the auxiliary data transferred from the processing device 50. The transferred 3D video data is processed in processing unit 62 for displaying on a 3D display 63, for example a dual or lenticular LCD. The display device 60 may be any type of stereoscopic display, also called 3D display, and has a display depth range indicated by arrow 64.

Alternatively the processing for providing and positioning the auxiliary data is performed in an embodiment of the display device. The 3D video data, and optional auxiliary data, are transferred via the display signal 56. The auxiliary data may also be locally generated in the display device, e.g. a menu. The processing unit 62 now performs the functions of combining the auxiliary data with the 3D video data on the 3D display. The processing unit 62 may be arranged for the corresponding functions as described above for the processing device. In a further embodiment the processing device and the display device are integrated in a single device, where a single set of processing means performs said functions.

Figure 1 further shows the record carrier 54 as a carrier of the 3D video signal. The record carrier is disc-shaped and has a track and a central hole. The track, constituted by a series of physically detectable marks, is arranged in accordance with a spiral or concentric pattern of turns constituting substantially parallel tracks on an information layer. The record carrier may be optically readable, called an optical disc, e.g. a CD, DVD or BD (Blue-ray Disc). The information is represented on the information layer by the optically detectable marks along the track, e.g. pits and lands. The track structure also comprises position information, e.g. headers and addresses, for indication the location of units of information, usually called information blocks. The record carrier 54 carries information representing digitally encoded 3D video data, for example encoded according to the MPEG2 or MPEG4 encoding system, in a predefined recording format like the DVD or BD format. The 3D video signal as described above, including said secondary data stream and further additional control data as defined below, is encoded by the marks in the track.

It is proposed to provide the additional, secondary stream of 3D video data to provide a background to dynamic auxiliary data, such that e.g. graphics that are generated in real-time can be composited onto this video background before the auxiliary depth. For example, the secondary stream may be included in the 3D video signal by interleaving the primary and secondary streams as two types of video on a storage medium using an interleaving mechanism.

In an embodiment the 3D video signal includes a depth indicator indicative of the auxiliary depth. For example, for every frame or Group of Pictures (GOP) the indicator is added to the 3D video signal. The indicator may include a single byte of data whereby the value indicates the nearest disparity between the left and right view of the stereoscopic video background based on the secondary data stream. Alternatively this depth value may indicate the disparity of any graphics overlay such that if the player composites real-time generated graphics that it should position the graphics at the disparity as indicated in the metadata. Providing the indicator enables the creator of the 3D video to control the depth at which any auxiliary data may be positioned in front of the shifted background video based on the secondary stream. Several ways of including the depth indicator are described now.

The processing device is to be equipped with a so called "Z" compositor which can overlay stereoscopic graphics on stereoscopic video. For example the "Z" compositor is included in the processing unit 52. The "Z" compositor interprets the auxiliary 3D control data and from this determines the positioning of the auxiliary data on top of the video in the 3D space, while applying the additional secondary stream. In a practical embodiment subtitles or menus are overlaid on 3D content, while temporarily displaying the secondary stream instead of the primary stream.

In an embodiment the depth indicator for the video background based on the secondary stream is included in a user data message according to a predefined standard transmission format such as MPEG4, e.g. a signaling elementary stream information [SEI] message of a H.264 encoded stream. The method has the advantage that it is compatible with all systems that rely on the H.264/AVC coding standard (see e.g. ITU-T H.264 and ISO/IEC MPEG-4 AVC, i.e. ISO/IEC 14496-10 standards). New encoders/ decoders could implement the new SEI message and decode the secondary stream whilst existing ones would simply ignore them.

In an embodiment of the 3D video signal control data packets in the video stream comprise 3D auxiliary control data. The control data may include a data structure to providing time segments of the 3D video signal for enabling said overlaying of auxiliary image data. The control data now indicates that said secondary data stream is included only during the time segments. In practice, e.g. for pop-up menu's and java graphics, the overlay will be contextually linked with the video content that is at that same moment shown in the background. Therefore it is safe to assume that the pop-up menu or interactive BD-java graphics overlay will mostly occur during certain segments in the movie. For providing the segments the entry-marks and multi-angle mechanisms in the Blu ray Disc standard may be extended to provide two types of video background during a certain segment of movie where stereo graphics may be overlaid over the video content in the background. One type of segment will contain the normal stereo video content consisting of a left and right view. The other will consist of stereo video with an altered left and/or right view, i.e. said secondary stream. The changed left and/or right views are appropriately prepared during authoring such that the stereo video becomes more suitable to overlay the stereo graphics on top. In this manner the content author can exert during the authoring process full control over the appearance of the video and video and graphics overlay and so can ensure that no artifacts occur when stereo graphics is overlaid on top of the stereo video background.

In a further embodiment the 3D video signal is formatted according to a predefined video storage format, e.g. the BD format. The predefined video format defines playable video items, so called playitems according to a playitem data structure. The playitem data structure is provided with an indicator indicating that the playable video item comprises the secondary data stream for enabling overlaying during said playitem.

In an embodiment the 3D auxiliary control data includes overlay markers indicative of the presence of the secondary stream. The markers may indicate the starting time, ending time, duration and/or location of the secondary stream. Alternatively control data for controlling overlaying of auxiliary image data and, during the overlaying, rendering the secondary stream may be included in the 3D video signal. For example, an instruction to display a menu at a predetermined time may be included, or an application program that controls generating auxiliary data in dependence of various events, such as a Java application.

A further data structure in a 3D video signal on a record carrier like Blu-ray Disc is an entry point map. The map indicates entry points that allow rendering of the video starting at the entry point. The entry point map data structure may be extended by adding the auxiliary control data, e.g. indicating the presence of the secondary stream at a particular entry point, and/or the depth indicator, for example, valid until the next entry point.

Alternatively the auxiliary 3D control data is provided as a XML based description, this description is transported in the data carousel of a MPEG-2 transport stream. An interactive TV application transmitted also in this MPEG-transport stream can make use of this XML based description to determine how to composite auxiliary graphics onto the stereoscopic video while using the secondary stream. Alternative the auxiliary 3D control data may be provided as an extension to the playlist.

For the above auxiliary 3D control data the processor 52 and the auxiliary processing unit 53 are arranged for said overlaying in dependence of the respective control data. Specifically, the time segments of the 3D video signal, which include said secondary data stream, are detected, the overlay markers in the 3D video signal indicative of the presence of the secondary stream are detected, the control data in the 3D video signal for controlling overlaying of auxiliary image data is detected, and/or the depth indicator indicative of the auxiliary depth is detected. The overlaying is performed according to said detected 3D auxiliary control data.

In an embodiment the secondary stream is encoded in dependence of the corresponding primary data stream and/or the other primary stream. As such, dependently encoding a video data stream that has a strong correspondence to an available data stream is known. For example, only differences with the corresponding primary stream may be encoded. Such difference will be minor because only objects that are close need to be shifted for adapting the disparity, i.e. reducing the disparity in order to shift the object backwards. In a specific embodiment the encoded data of the secondary stream may also contain shift data that indicates the amount of shift with respect to the corresponding primary stream. It is noted that also the other primary stream may be used for said dependent encoding. In fact the secondary stream may also use the other stream for providing data around shifted objects because the other stream will contain video data that is de-occluded due to said disparity shifting. For such a dependent encoded secondary stream the processor 52 has a decoder 520 for decoding the secondary stream in dependence of the corresponding primary data stream and/or the other primary stream.

In an embodiment the Blu-ray Disc standard is extended with a new mechanism that links both Clip AV stream files, which is a segment of a transport stream that contains all the elementary streams required for presentation of the audio and video, with the Epoch start and composition time-out of pop-up menu's in the Blu-ray Disc interactive graphics specification. Additionally the BD-Java application programming interface (API) of the Blu-ray Disc A/V format is extended with signaling such that an BD-Java application can be notified when a certain segment is reached that contains that part of the video content during which the BD-java application can draw graphics on top of the video.

Figure 2 shows a 3D video signal including a secondary stream of video data. A 3D video signal 21 is schematically shown along a time axis T. The signal contains a transport stream that consists of an elementary stream for the left view and an additional stream for the right view data, called primary streams in this document. The primary streams contain the normal stereo video content.

The 3D video signal also contains a secondary stream 23 as described above that contains stereo video content that is specially adapted to accommodate some space in the depth direction to allow overlay of stereo graphics without any loss in quality. In the overlaying mode any auxiliary data is overlayed in said depth space over the adapted background video.

In the Figure there are two types of segments: a first type of segment 24 that contains the normal transport stream representing the normal stereo video content. A second type of segment 27 has both the primary streams 22 and the secondary stream 23 included in the signal in an interleaved way. Interleaving enables a receiving device like an optical disc player to reproduce either the primary streams or the secondary stream without jumping to a different part of the disc. Also one or more audio streams and other auxiliary data streams may be included in the 3D video signal (not shown) and are available for reproducing in either the normal mode or the overlaying mode based on the secondary stream.

The Figure further shows a start marker 25 and an end marker 26, e.g. indicator bits or flags in packet headers of the respective streams. The start marker 25 indicates the start of the segment 27 having said secondary stream for adapted background video, and end marker 26 indicates the end of the segment 27, or the start of a normal segment 24.

To implement the invention in a practical system, e.g. the BD system, the following four steps are required. The disc data format is changed to provide said segment types as follows. A section of the 3D video content is named Epoch. Between an Epoch start and a composition time out presentation time stamp (PTS) values of a interactive graphics composition the disc contains said primary and secondary streams of stereo video that are interleaved on the disc. The secondary stream is adapted such that room is created in front of the projection to allow overlay of stereo graphics. A segment of the video signal having the primary and secondary streams shall meet the same constraints on coding and disc allocation of multi-angle segments as defined in the BD system.

Secondly the disc data format is changed to have metadata that indicates to the player that, during an interactive composition containing stereo graphics for pop-up menus, a different stream of the interleaved streams on the disc should be decoded and presented when the pop-up menu is active. To enable this the format shall be adapted to contain said markers 25,26.

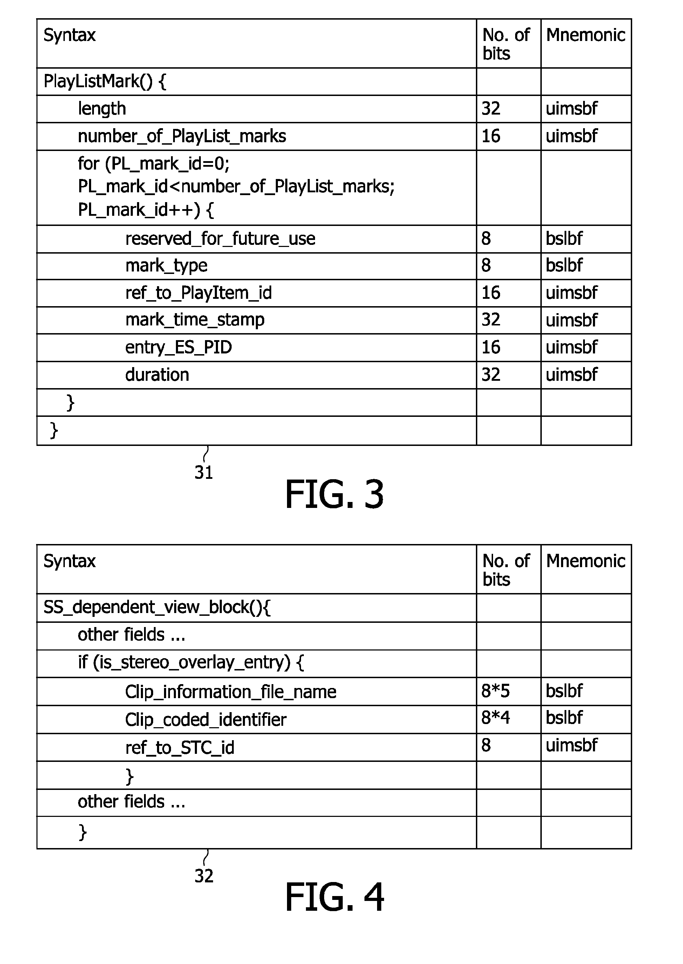

Figure 3 shows a data structure including 3D overlay markers. The Figure shows a table 31 that defines the syntax for marks in a 3D video signal based on play lists in the BD system, called **PlaylistMark.** The PlayListMark semantics are as follows. The **length** is a 32-bit field coded as a 32-bit unsigned integer (uimbsf) that indicates the number of bytes of the PlayListMark() immediately following this length field and up to the end of the PlayListMark(). The **number_of_PlayList_marks** is a 16-bit unsigned integer which gives the number of Mark entries stored in the PlayListMark(). The PL_mark_id values are defined by the order described in the for-loop of PL_mark_id, starting from zero. The **mark_type** is an 8-bit field (bslbf) that indicates the type of the Mark. The **ref_to_PlayItem_id** is 16-bit field that indicates a PlayItem_id value for a PlayItem on which the Mark is placed. The PlayItem_id value is given in a PlayList() of a PlayList file. The **mark_time_stamp** is 32-bit field contains the time-stamp that indicates the point where the mark is placed. The mark_time_stamp shall point to a presentation-time in the interval from the IN_time until the OUT_time of the PlayItem referred to by the ref_to_PlayItem_id, measured in units of a 45kHz clock. If the **entry_ES_PID** is set to 0xFFFF, the Mark is a pointer to the time-line that is common for all elementary streams used by the PlayList. If the *entry_ES_PID* is not set to 0xFFFF, this field indicates a value of PID of the transport packets that contain the elementary stream that is pointed to by the Mark. The **duration** is measured in units of a 45kHz clock.

Various values of the mark_type are predefined in the BD system. Additional mark-types are defined now for said start and end markers 25,26 as described above, and are included in the table, which indicate when a Java application may overlay stereo graphics on top of the stereo video background. The markers may alternatively be an entry-mark to indicate a segment, while the segment itself indicates to be of the overlayable type.

A new mark type may be defined which indicates the 3D overlay functionality, e.g. a "stereo graphics overlay mark" or a special ClipMark in the BD system, where the ClipMark traditionally is a reserved field in the clip information file (metadata associated to a segment of A/V content). The special ClipMark is now included for the purpose of indicating that the Clip is of the overlayable type. In addition the disc format may specify in an indexes table that the title is an interactive title. Furthermore in case the format on disc contains BD-java applications the BD-J title playback type may be defined as being an interactive title.

Furthermore the BD-format playlist structure may be extended to indicate that a certain segment of the movie contains special stereo video content adapted for stereo graphics overlay. The BD-format playlist structure defines the metadata required such that the player can identify certain segments of video content also called playitems. The playitems carry the information of what elementary streams should be decoded and presented during that segment of the movie content. The playitems also indicate parameters such that the player can seamlessly decode and presents consecutive segments of audio and video content. The playitem data structure is extended with an is_stereo_overlay entry, which indicates to the player that during this playitem there are said interleaved primary and secondary streams of stereo video.

Figure 4 shows an additional entry to a playitem. The Figure shows a table 32 that defines the syntax for dependent view section in a 3D video signal for the play item in the BD system, called **SS_dependent_view_block.** The table is an example of part of a playitem extended with an **is_stereo_overlay_entry.** If the playitem is extended, the following elements are included. **Clip_information_file_name:** The name of the Clip information file for the clip (segment of video) used by the playitem when stereoscopic graphics overlay is activated. **Clip_coded_identifier:** This entry shall have the value "M2TS" encoded as defined in ISO 646. **ref_to_STC_id:** Indicator for a System Time Clock reference in the Clip information file of this sequence in the clip.

In addition an additional structure traditionally intended to hold information about multi angle video, e.g. the multi-clip-entries structure, may carry identification information on the clips (segments of video and audio content) for the stereo video with and without graphics overlay.

In the overlayable type the indicators indicating that the playable video item comprises the secondary data stream for enabling overlaying may replace the multi-angle information in a playitem.

A Playitem will then either support multi-angle or multi-stereo. This restriction can be lifted by duplicating the multi-clip structure in the playtem such that it contains both entries for multi-angle and multi-stereo. Restrictions on the amount of angles allowed may be placed to ensure that the constraints stay within the limits defined in the BD system as to the amount and size of the interleaved segments on the disc.

Thirdly the BD-Java API is extended such that it provides an overlay function to a Java application on the disc. The function enables the application to register and receive an event when during playback the position in the video is reached that contains the secondary streams of stereo video. This either through the newly defined playlist markers or through an event generated when the player automatically changes playback from one clip to the other. The first method is preferred as this can be used to notify the application before the start of the special segment such that it can prepare by allocating the resources required for drawing stereo graphics overlay. The new mark type (as mentioned earlier, or a similar indicator) provides the stereo graphics overlay mark and control that allows the application to select which of the special stereo video segments to play. The functionality is similar to the current control for multi-angle video. Further control parameters may be added to allow a Java application to notify to the player that it wishes to start or has finished drawing stereo graphics overlay so that the player automatically may switch playback back to the "normal" stereo video content. This control or method may for example be called the POP-upStereoGraphics control. It has an ON and OFF state. When in the ON state the player should decode and present those video clips that contain the specially prepared stereo video content. When in the OFF state the player decodes and presents the normal stereo video clips.

Fourth the player is adapted such that, when the player encounters a playitem structure that contains the is_stereo_overlay entry, it automatically switches to that clip that contains the stereo video for graphics overlay when a pop-up menu is activated or when a Java Application has indicated through the relevant newly defined API's that it wishes to overlay stereo graphics.

Although the invention has been mainly explained by embodiments based on the Blu-Ray Disc system, the invention is also suitable for any 3D signal, transfer or storage format, e.g. formatted for distribution via the internet. The invention can be implemented in any suitable form including hardware, software, firmware or any combination of these. The invention may optionally be implemented as a method, e.g. in an authoring or displaying setup, or at least partly as computer software running on one or more data processors and/or digital signal processors.

It will be appreciated that the above description for clarity has described embodiments of the invention with reference to different functional units and processors. However, the invention is not limited to the embodiments, and lies in each and every novel feature or combination of features described. Any suitable distribution of functionality between different functional units or processors may be used. For example, functionality illustrated to be performed by separate units, processors or controllers may be performed by the same processor or controllers. Hence, references to specific functional units are only to be seen as references to suitable means for providing the described functionality rather than indicative of a strict logical or physical structure or organization.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way. The word 'comprising' does not exclude the presence of other elements or steps than those listed.

## Claims

1. Method of providing a three dimensional [3D] video signal,
the method comprising generating the 3D video signal by
- including a first primary data stream representing a left image to be displayed for the left eye of a viewer and a second primary data stream representing a right image to be displayed for the right eye of the viewer for rendering 3D video data exhibiting a nominal depth range, and, for enabling overlaying auxiliary image data on the 3D video data at an auxiliary depth in the nominal depth range,
- including a secondary data stream to be displayed for one of the eyes instead of the respective primary data stream for rendering the 3D video data exhibiting a modified depth range farther away from the viewer than the auxiliary depth.

2. Method as claimed in claim 1, wherein the method comprises
- providing time segments of the 3D video signal for enabling said overlaying of auxiliary image data, and
- including said secondary data stream only during the time segments.

3. Method as claimed in claim 1, wherein the method comprises including in the 3D video signal at least one of
- overlay markers indicative of the presence of the secondary stream;
- control data for controlling overlaying of auxiliary image data and, during the overlaying, rendering the secondary stream;
- a depth indicator indicative of the auxiliary depth.

4. Method as claimed in claim 1, wherein the secondary stream is encoded in dependence of at least one of
- the corresponding primary data stream;
- the other primary stream.

5. Method as claimed in claim 1, wherein the 3D video signal is formatted according to a predefined video storage format, the predefined video format comprising playable video items having a playitem data structure, and the playitem data structure is provided with an indicator indicating that the playable video item comprises the secondary data stream for enabling overlaying.

6. Method as claimed in claim 1, wherein the method comprises the step of manufacturing a record carrier, the record carrier being provided with a track of marks representing the 3D video signal.

7. Method of processing a 3D video signal, the method comprising
- retrieving from the 3D video signal a first primary data stream representing a left image to be displayed for the left eye of a viewer and a second primary data stream representing a right image to be displayed for the right eye of the viewer for rendering 3D video exhibiting a nominal depth range,
- retrieving from the 3D video signal a secondary data stream to be displayed for one of the eyes instead of the respective primary data stream for rendering the 3D video exhibiting a modified depth range farther away from the viewer than an auxiliary depth,
- providing auxiliary data, and
- overlaying, at a depth closer to the viewer than the auxiliary depth, the auxiliary image data on the 3D video data based on the secondary data stream.

8. 3D source device (40) for providing a 3D video signal (41), the 3D source device comprising processing means (42) for generating the 3D video signal by
- including a first primary data stream representing a left image to be displayed for the left eye of a viewer and a second primary data stream representing a right image to be displayed for the right eye of the viewer for rendering 3D video data exhibiting a nominal depth range, and, for enabling overlaying auxiliary image data on the 3D video data at an auxiliary depth in the nominal depth range,
- including a secondary data stream to be displayed for one of the eyes instead of the respective primary data stream for rendering the 3D video data exhibiting a modified depth range farther away from the viewer than the auxiliary depth.

9. 3D processing device (50) for processing a 3D video signal, the device comprising
receiving means (51,58,59) for receiving the 3D video signal, and
processing means (52,53) for
- retrieving from the 3D video signal a first primary data stream representing a left image to be displayed for the left eye of a viewer and a second primary data stream representing a right image to be displayed for the right eye of the viewer for rendering 3D video exhibiting a nominal depth range,
- retrieving from the 3D video signal a secondary data stream to be displayed for one of the eyes instead of the respective primary data stream for rendering the 3D video exhibiting a modified depth range farther away from the viewer than an auxiliary depth,
- providing auxiliary data, and
- overlaying, at a depth closer to the viewer than the auxiliary depth, the auxiliary image data on the 3D video data based on the secondary data stream.

10. Device as claimed in claim 9, wherein the processing means (52,53) are arranged for said overlaying in dependence of at least one of
- detecting time segments of the 3D video signal, which include said secondary data stream;
- detecting overlay markers in the 3D video signal indicative of the presence of the secondary stream;
- detecting control data in the 3D video signal for controlling overlaying of auxiliary image data;
- detecting a depth indicator indicative of the auxiliary depth.

11. Device as claimed in claim 9, wherein the device comprises means (520) for decoding the secondary stream in dependence of at least one of
- the corresponding primary data stream;
- the other primary stream.

12. Device as claimed in claim 9, wherein the device comprises at least one of
- means (58) for reading a record carrier for receiving the 3D video signal;
- 3D display means (63) for displaying the auxiliary data in combination with the 3D video data.

13. 3D video signal for transferring 3D video data, the 3D video signal comprising
- a first primary data stream (22) representing a left image to be displayed for the left eye of a viewer and a second primary data stream representing a right image to be displayed for the right eye of the viewer for rendering 3D video data exhibiting a nominal depth range,
and, for enabling overlaying auxiliary image data on the 3D video data at an auxiliary depth in the nominal depth range,
- a secondary data stream (23) to be displayed for one of the eyes instead of the respective primary data stream for rendering the 3D video data exhibiting a modified depth range farther away from the viewer than the auxiliary depth.

14. Record carrier (54) comprising the 3D video signal as claimed in claim 13.

15. Computer program product for processing a 3D video signal, which program is operative to cause a processor to perform the respective steps of the method as claimed in any one of the claims 1 to 7.
